# EUROPEAN PATENT APPLICATION

(11) **EP 4 730 629 A1**
(43) Date of publication of application: **22.04.2026**
(21) Application number: 24207570.3
(22) Date of filing: 18.10.2024
(51) Int. Cl.: H02M 1/12, H02M 7/487

(54) **POWER CONVERTERS WITH COMMON MODE LOOP**

(71) Applicant: Volvo Penta Corporation, 405 08 Göteborg (SE)
(72) Inventor: Kersten, Anton, 433 42 Partille (SE)
(74) Representative: Valea AB

(57) **Abstract**

A power converter (200) with common mode loop is provided. The common mode loop is formed in the power converter (200) by any one of the following connections: a connection (261) between a neutral terminal (N_{F}) of the multi-phase filter (240) and the neutral terminal (Nb) of the battery pack; a connection (362) between a neutral terminal (N_{F}) of the multi-phase filter (240) and the negative terminal (NT_{b}) of the battery pack (210); a connection (463) between a neutral terminal (N_{F}) of the multi-phase filter (240) and the positive terminal (PT_{b}) of the battery pack (210); a first connection (564) between a first neutral terminal (N_{F1}) of the multi-phase filter (240) and the negative terminal (NT_{b}) of the battery pack (210) and a second connection (565) between a second neutral terminal (N_{F2}) of the multi-phase filter (240) and the positive terminal (PT_{b}) of the battery pack (210).

## Description

### TECHNICAL FIELD

The disclosure relates generally to power electronics. In particular aspects, the disclosure relates to power converters with common mode loop in an electrical energy storage system. The disclosure can be applied to any power system and vehicles using electrical energy storage system, such as heavy-duty vehicles, e.g. trucks, buses, and construction equipment, among other vehicle types. Although the disclosure may be described with respect to a particular vehicle, the disclosure is not restricted to any particular vehicle.

### BACKGROUND

In an electrical energy storage system (EES), power conversion system comprising one or more power electronic stages, e.g. direct current to direct current (DC/DC) converters, direct current to alternating current (DC/AC) inverters, alternating current to direct current (AC/DC) inverters are used to handle bidirectional flow of power, allowing for both charging from a power system or energy sources, e.g. traditional grid, renewable energy sources, motors etc., to the ESS and discharging from the ESS to the power system. A bidirectional AC/DC converter is typically connected via a transformer to the power system. A transformer blocks common mode currents, but it is bulky and expensive. A direct connection of the AC/DC converter to the power system is possible, but the resulting common mode voltages can be dangerous for humans or otherwise a residual current device, i.e. Ground Fault Circuit Interrupter (GFCI) in the power conversion system, is very susceptible to the common mode current and cannot work properly.

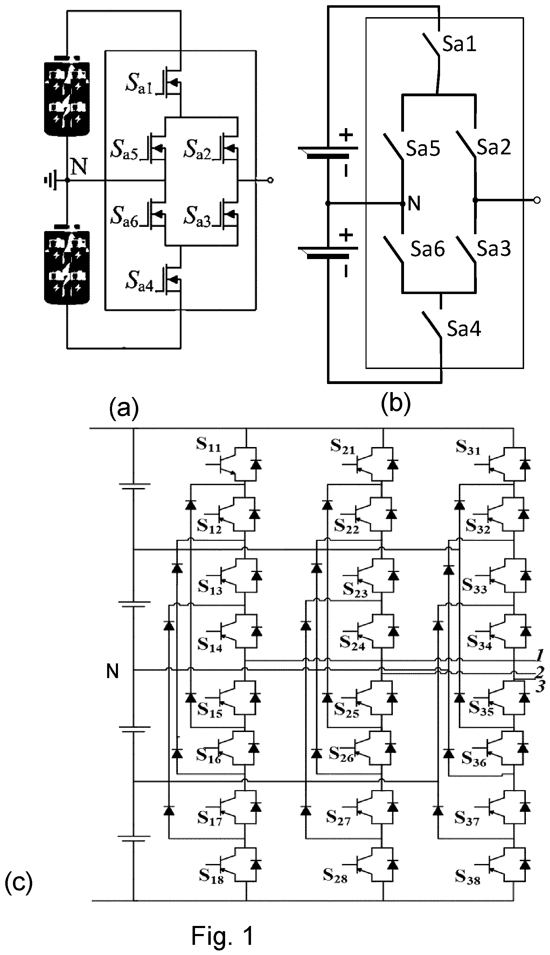

Multilevel Neutral Point Clamped (NPC) inverters are usually used in bidirectional AC/DC converters in electrical systems, particularly in applications such as renewable energy systems, motor drives, and high-voltage direct current (HVDC) transmission systems. NPC inverter is a type of multilevel power inverter known for its ability to produce high-quality output voltage with reduced total harmonic distortion (THD) and lower switching losses compared to conventional two-level inverters. The NPC inverter achieves these benefits through its unique topology, which includes multiple power semiconductor switches implemented by e.g. Insulated Gate Bipolar Transistors (IGBTs) or Metal-Oxide-Semiconductor Field-Effect Transistors (MOSFETs), arranged in such a way that they can generate several voltage levels across a load. **Figs. 1 (a)-(i)** are schematic block diagrams showing different types of NPC inverters, where **(a)** is a 3-level NPC inverter implemented by MOSFETs, **(b)** is a 3-level NPC inverter implemented by switches, **(c)** is a 3-phase 5-level NPC inverter implemented by IGBTs, **(d)** is an I-type NPC inverter, **(e)** is an active I-type NPC inverter, **(f)** is a T-type NPC inverter, **(g)** is an F type NPC inverter, **(h)** is a 3-phase 3-level NPC inverter with single battery, and **(i)** is a 3-phase 3-level NPC inverter with dual battery. The key feature of the NPC inverter is its ability to achieve multiple voltage levels across the load by clamping the midpoint of the DC bus to a neutral point **"N"** as indicated in Figs. 1(a)-(i).

However, how to connect different types of NPC inverters to the power system without introducing common mode voltages is still an important issue.

### SUMMARY

According to a first aspect of the disclosure, a power converter with a common mode loop is provided. The power converter comprises a battery pack having a neutral terminal, a positive terminal and a negative terminal; a capacitive DC link connected in parallel with the battery pack; a multi-phase converter, each of the multi-phase converter comprises an NPC inverter having a neutral terminal, an output terminal, a positive terminal and a negative terminal; a multi-phase filter having one or two neutral terminals, each of the multi-phase filter has an input terminal and an output terminal. The neutral terminals of the NPC inverters in the multi-phase converter are connected to the neutral terminal of the battery pack or a middle voltage point of the DC link. The positive and negative terminals of the NPC inverters in the multi-phase converter are connected to the positive and negative terminals of the battery pack respectively. The output terminals of the multi-phase converter are connected to the respective input terminals of the multi-phase filter. The output terminals of the multi-phase filter are connected to a power system. The common mode loop is formed in the power converter by any one of the following connections:
(a) a connection between a neutral terminal of the multi-phase filter and the neutral terminal of the battery pack;
(b) a connection between a neutral terminal of the multi-phase filter and the negative terminal (NTb) of the battery pack;
(c) a connection between a neutral terminal of the multi-phase filter and the positive terminal of the battery pack;
(d) a first connection between a first neutral terminal of the multi-phase filter and the negative terminal of the battery pack and a second connection (565) between a second neutral terminal of the multi-phase filter and the positive terminal of the battery pack.

The first aspect of the disclosure may seek to reduce common mode voltages when connecting the power converter directly to a power system so that safety of the power converter is improved, and malfunction of the power converter is reduced. A technical benefit may include providing a common mode loop in the power converter to sink the common mode currents, thus the safety of the power converter for humans handling the power converter is improved and the malfunction of the power converter is reduced. Compared to other methods, the system power density and efficiency is increased.

Optionally in some examples, including in at least one preferred example, any one of the above connections (a) to (d) may be implemented by a cable or an impedance component. A technical benefit may include providing a common mode loop in the power converter with less bulky and expensive components.

Optionally in some examples, including in at least one preferred example, the NPC inverter in the power converter may be any one of a multi-level NPC inverter, an I-type NPC inverter, an active I-type NPC inverter, a T-type NPC inverter, an F-type NPC inverter, and a multi-level version of I-type, active I-type, T-type, F-type NPC inverter. A technical benefit may include providing a common mode loop for the power converter with different types of NPC inverters to reduce common mode voltages, improve the safety for humans and reduce the malfunction of the power converter.

Optionally in some examples, including in at least one preferred example, the power converter may be any one of a Voltage Source Converter, a High Voltage Direct Current converter, a Direct Current to Direct Current converter, a Direct Current to Alternating Current converter, an Alternating Current to Direct Current converter. A technical benefit may include providing a common mode loop connection for different types of power converters to reduce common mode voltages, improve safety for humans handling the power converter and reduce malfunction of the different power converter converters.

Optionally in some examples, including in at least one preferred example, the neutral terminal of the battery pack may be connected to the middle voltage point of the DC link directly or via a switch.

Optionally in some examples, including in at least one preferred example, the multi-phase filter may be any one of an inductor capacitor inductor (LCL) filter, an inductor inductor-capacitor inductor (LLCL) filter, a cascaded LCL filter, or a cascaded LLCL filter

Optionally in some examples, including in at least one preferred example, the power converter may be implemented in a renewable energy system, a motor drive system, a high-voltage direct current transmission system, or a battery energy storage system. A technical benefit may include providing a power converter with a common mode loop for different applications to reduce common mode voltages, improve the safety for humans handling the power converter and reduce malfunction of the power converter.

Optionally in some examples, including in at least one preferred example, the power converter may be implemented in a motor drive system of a vehicle. A technical benefit may include providing a power converter with a common mode loop to the vehicle to reduce common mode voltages, improve safety for humans handling the power converter and reduce malfunction of the power converter.

According to a second aspect of the disclosure, a method for forming a common mode loop in the power converter described above is provided. The method comprises forming a common mode loop by any one of the following options:
(a) providing a connection between a neutral terminal of the multi-phase filter and the neutral terminal of the battery pack;
(b) providing a connection between a neutral terminal of the multi-phase filter and the negative terminal (NTb) of the battery pack;
(c) providing a connection between a neutral terminal of the multi-phase filter and the positive terminal of the battery pack;
(d) providing a first connection between a first neutral terminal of the multi-phase filter and the negative terminal of the battery pack, and providing a second connection between a second neutral terminal of the multi-phase filter to the positive terminal of the battery pack.

The second aspect of the disclosure may seek to reduce common mode voltages when connecting the power converter directly to a power system so that safety of the power converter is improved, and malfunction of the power converter is reduced. A technical benefit may include providing a common mode loop in the power converter to sink the common mode currents, thus the safety of the power converter for humans handling the power converter is improved and the malfunction of the power converter is reduced.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1 (a)-(i)** are exemplary NPC inverters according to some examples.
**FIG. 2** is an exemplary power converter with common mode loop according to an example.
**FIG. 3** is an exemplary power converter with common mode loop according to an example.
**FIG. 4** is an exemplary power converter with common mode loop according to an example.
**FIG. 5** is an exemplary power converter with common mode loop according to an example.
**FIG. 6 (a)-(c)** are exemplary multi-phase filters.
**FIG. 7** is a flow chart showing a method for forming a common mode loop for a power converter according to an example.
**FIG. 8** is an exemplary vehicle comprising a power converter according to an example.

### DETAILED DESCRIPTION

The detailed description set forth below provides information and examples of the disclosed technology with sufficient detail to enable those skilled in the art to practice the disclosure.

To reduce common mode voltages and sink common mode currents caused by connecting a power converter directly to a power system, a common mode loop is formed for the power converter. In this way, the safety for humans handling the power converter is improved and the malfunction of the power converter is reduced.

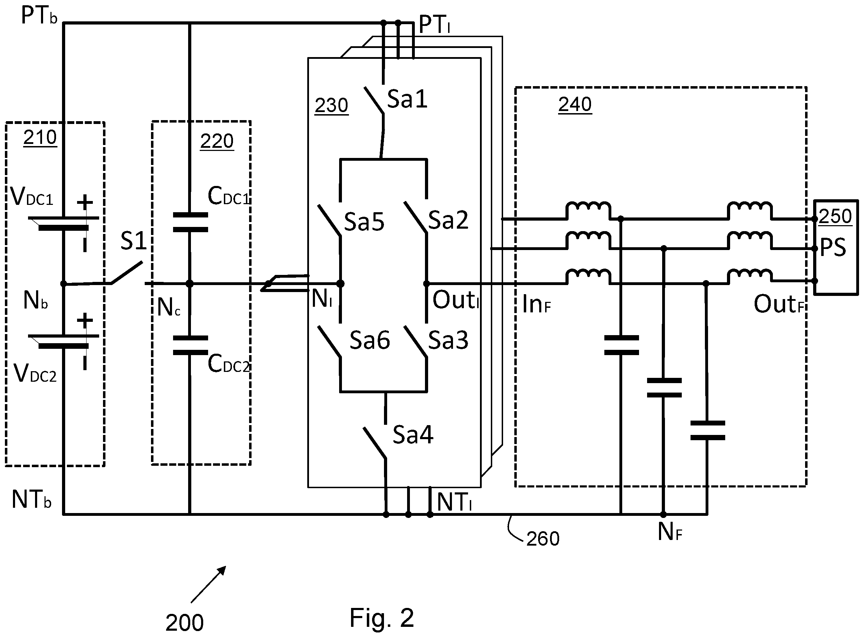

Fig. **2** is an exemplary power converter **200** with a common mode loop according to a first example. The power converter 200 comprises a battery pack **210** having a neutral terminal **N_{b}**, i.e. the middle voltage point of a dual battery, a positive terminal **PT_{b}** and a negative terminal **NT_{b}.** The neutral terminal N_{b} of the battery pack 210 may be connected to a middle voltage point **N_{c}** of the DC link 220 directly or via a switch **S1.** The power converter 200 further comprises a capacitive direct current (DC) link **220** connected in parallel with the battery pack 210. The power converter 200 further comprises a multi-phase converter **230,** e.g. a 3-phase inverter, where only a first phase inverter, i.e. a 3-level NPC inverter implemented by switches, is shown. Each of the multi-phase converters 230 comprises a multilevel NPC inverter having a neutral terminal **N_{I},** an output terminal **Out_{I},** a positive terminal **PT_{I}** and a negative terminal **NT_{I}.**

The power converter 200 further comprises a multi-phase, e.g. 3-phase, filter **240** having a neutral terminal **N_{F}.** The multi-phase filter 240 may be an inductor capacitor inductor (LCL) filter as shown in Fig.2. The floating connection at the capacitors of the multi-phase LCL filter 240, which is also referred to as floating neutral point is the neutral terminal of the multi-phase filter 240. Each of the multi-phase filter 240 has an input terminal **In_{F},** an output terminal **Out_{F}**.

The neutral terminals N_{I} of the NPC inverters in the multi-phase converter 230 may be connected to the middle voltage point N_{c} of the DC link 220 or to the neutral terminal N_{b} of the battery pack 210 directly or via the switch S1. The positive and negative terminals PT_{I}, NT_{I} of the NPC inverters in the multi-phase converter 230 are connected to the positive and negative terminals PT_{b}, NT_{b} of the battery pack 210 respectively. The output terminals Outi of the multi-phase converter 230 are connected to the respective input terminals In_{F} of the multi-phase filter 240. The output terminals OutF of the multi-phase filter 240 are connected to a power system 250.

A common mode loop is formed in the power converter 200 by a connection **260** between the neutral terminal N_{F} of the multi-phase filter 240 and the neutral terminal Nb of the battery pack 210. The common mode loop connection 261 may be a cable or an impedance component. The common mode loop connection 261 will sink common mode currents if there is common mode voltage caused by connecting the power converter directly to the power system 250. The common mode voltage may occur due to pulse width modulation (PWM) or space vector modulation control of the multi-phase converter 230.

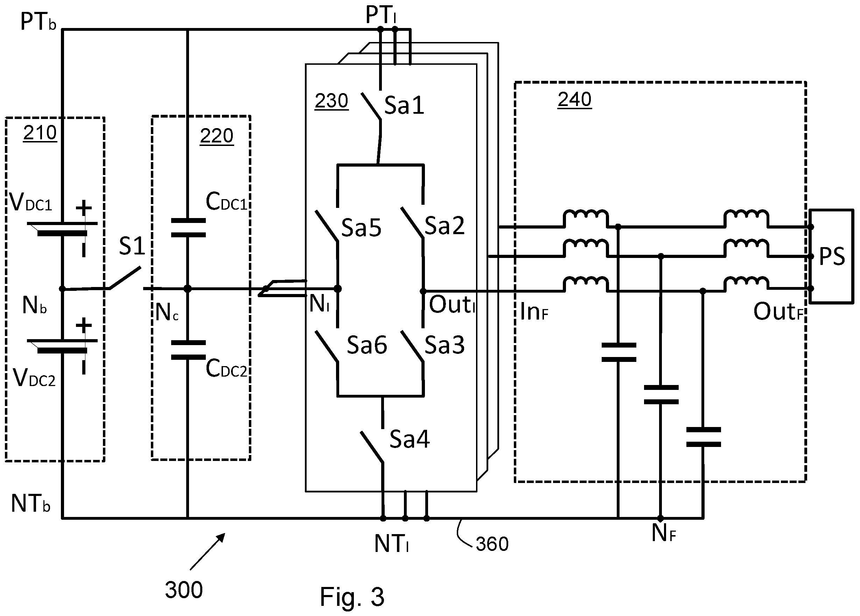

There are different alternatives to form a common mode loop in the power converter. **Fig. 3** is an exemplary power converter **300** with a common mode loop according to a second example. A common mode loop is formed in the power converter 300 by a connection **360** between a neutral terminal N_{F} of the multi-phase filter 240 and the negative terminal NT_{b} of the battery pack 210.

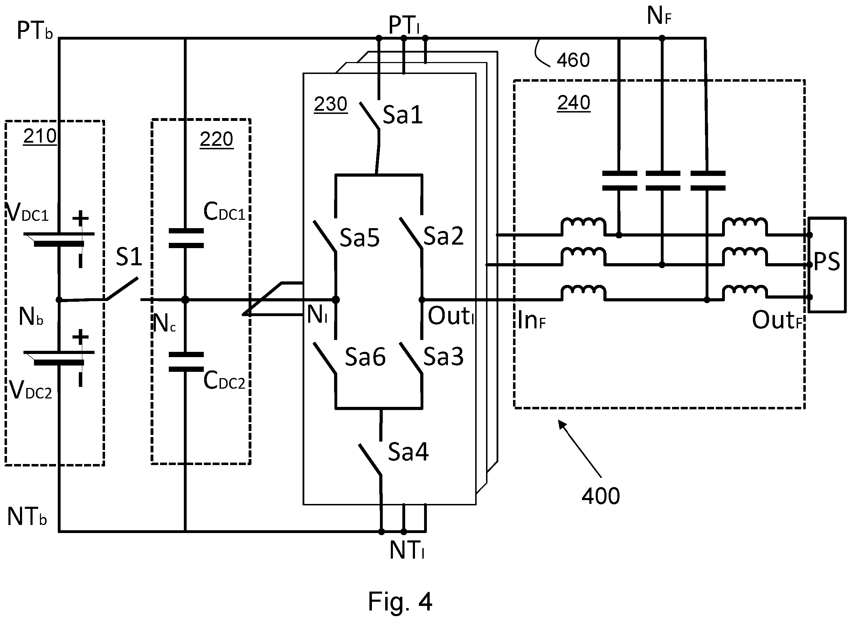

**Fig. 4** is an exemplary power converter **400** with a common mode loop according to a third example. A common mode loop is formed in the power converter 400 by a connection **460** between a neutral terminal N_{F} of the multi-phase filter 240 and the positive terminal PT_{b} of the battery pack 210.

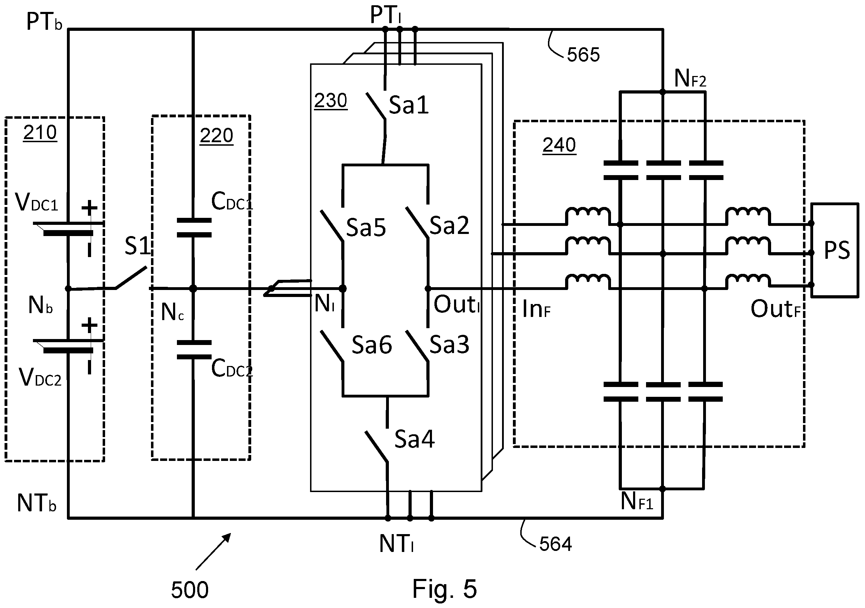

**Fig. 5** is an exemplary power converter **500** with a common mode loop according to a fourth example. In this case, the capacitors in the multi-phase filter 240 are implemented symmetrically and there are two neutral terminals **N_{F1}**, **N_{F2}** in the filter 240. A common mode loop is formed in the power converter 500 by a first connection **561** between a first neutral terminal N_{F1} of the multi-phase filter 240 and the negative terminal NT_{b} of the battery pack 210 and a second connection **562** between a second neutral terminal N_{F2} of the multi-phase filter 240 and the positive terminal PT_{b} of the battery pack 210.

The common mode loop connections 260, 260, 460, 561, 562 may be implemented by a cable or an impedance component which is less bulky and expensive than transformers. Any one of the common mode loop connections 260, 260, 460, 561, 562 may be a cable or an impedance component connecting two terminals directly or via a switch.

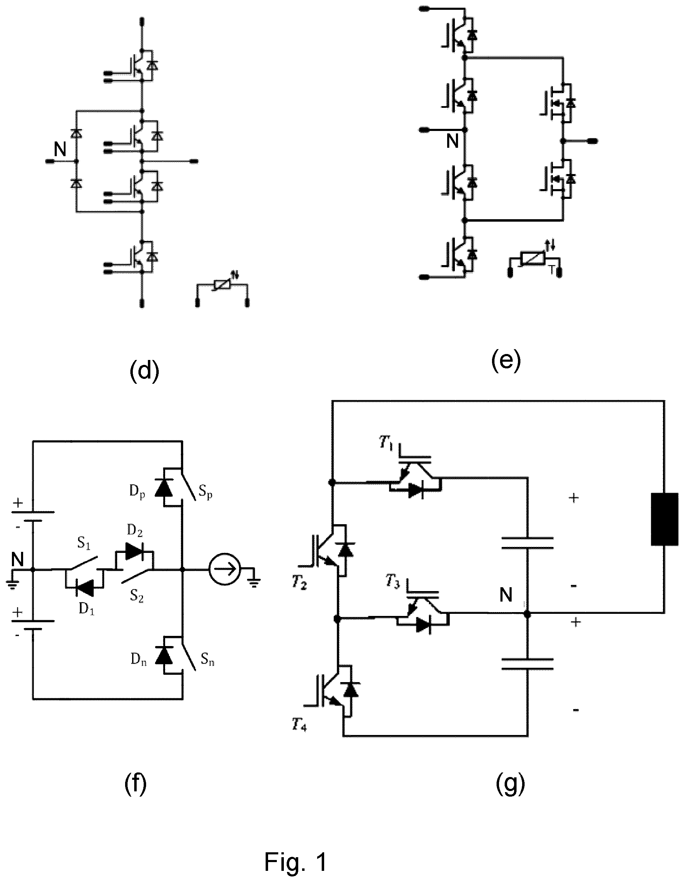

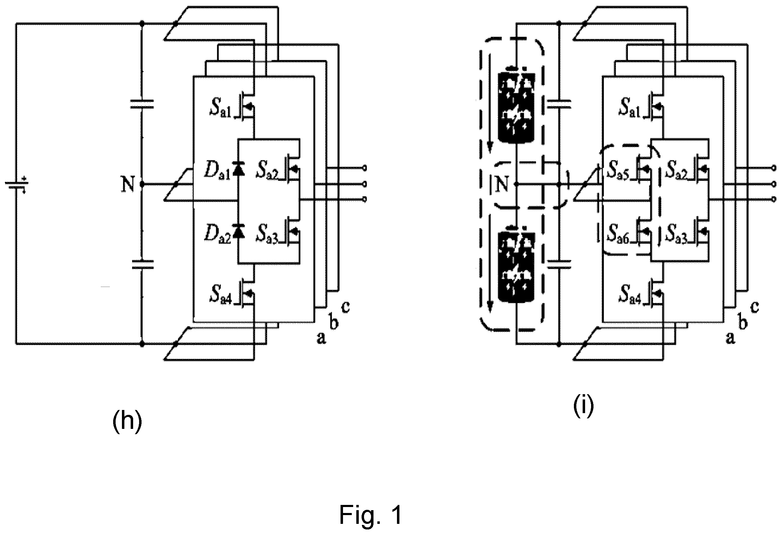

Figs. 2-5 are just exemplary power converters implemented by 3-level NPC inverters. The common mode loop connections 260, 260, 460, 561, 562 may be implemented in any type of power converters implemented by any level of NPC inverters, e.g. I-type NPC inverters, active I-type NPC inverters, T-type NPC inverters, F-type NPC inverters as shown in Fig. 1, and all these types of inverters in multi-level, e.g. a multi-level version of I-type, multi-level active I-type, multi-level T-type, multi-level F-type NPC inverters etc.

The common mode loop connections 260, 260, 460, 561, 562 may be implemented in any type of the power converters, such as Voltage Source Converters (VSCs), High Voltage Direct Current (HVDC) converters, DC/DC converters, DC/AC converters, AC/DC converters etc. The power converters 200, 300, 400, 500 may be implemented in a renewable energy system, a motor drive system, a HVDC transmission system, or a battery energy storage system.

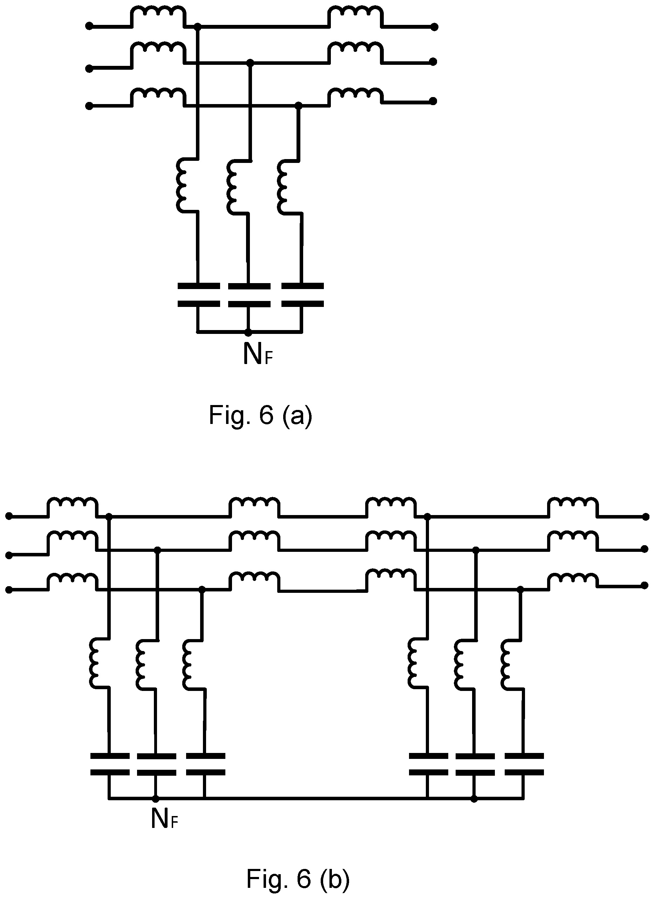

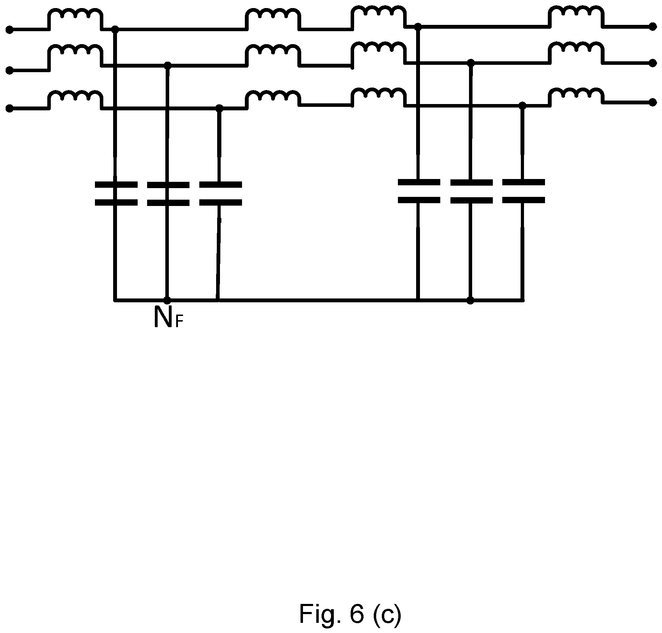

The multi-phase filter 240 may be any type of a multi-phase LCL filter or a multi-phase inductor inductor-capacitor inductor (LLCL) filter, a multi-phase cascaded LCL filter, or a multi-phase cascaded LLCL filter. **Fig. 6** shows some examples of the multi-phase filter 240, where (a) is a multi-phase LLCL filter, (b) is a multi-phase cascaded LLCL filter, and (c) is a multi-phase cascaded LCL filter.

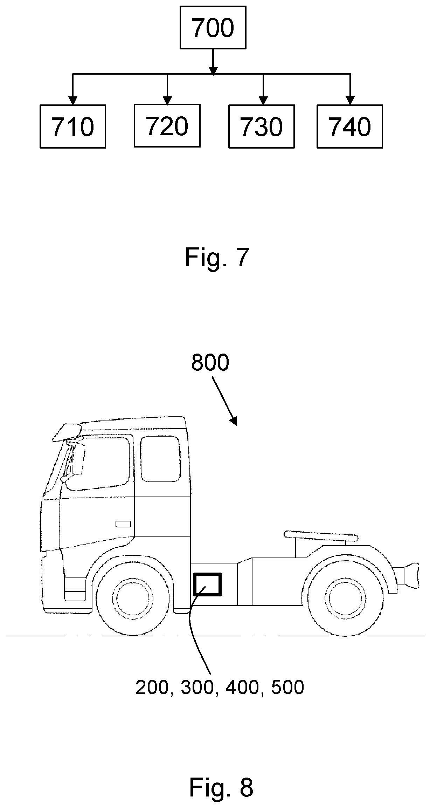

A method **700** for forming a common mode loop in the power converter 200, 300, 400, 500 will be described with reference to **Fig.7****.** The method comprises at least one of the following options:
**710:** Forming the common mode loop by providing a connection between the neutral terminal N_{F} of the multi-phase filter 240 and the neutral terminal Nb of the battery pack 210.
**720:** Forming the common mode loop by providing a connection between the neutral terminal N_{F} of the multi-phase filter 240 and the negative terminal NT_{b} of the battery pack 210.
**730:** Forming the common mode loop by providing a connection between the neutral terminal N_{F} of the multi-phase filter 240 and the positive terminal PT_{b} of the battery pack 210.
**740:** Forming the common mode loop by providing a first connection between a first neutral terminal N_{F1} of the multi-phase filter 240 and the negative terminal NT_{b} of the battery pack 210, and providing a second connection between a second neutral terminal N_{F2} of the multi-phase filter 240 and the positive terminal PT_{b} of the battery pack 210.

Any one of the connections described above may be a cable or an impedance component connecting two terminals directly or via a switch.

The power converters 200, 300, 400, 500 may be implemented in a motor drive system of a vehicle. **Fig.8** shows an exemplary vehicle **800** in which the power converters 200, 300, 400, 500 may be implemented. The vehicle 800 comprises a power converter 200, 300, 400, 500 with common mode loop as described above.

### Some examples:

Example 1. A power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Outi), a positive terminal (PT_{I}) and a negative terminal (NTi);
a multi-phase inductor-capacitor-inductor filter (240) having one or two neutral terminals (N_{F}, N1_{F}, N2_{F}), each of the multi-phase filter has an input terminal (In_{F}), an output terminal (Out_{F}) ; wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NTi) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are connected to a power system (250); and wherein
a common mode loop is formed in the power converter by any one of the following connections:
   (a) a connection (261) between a neutral terminal (N_{F}) of the multi-phase filter (240) and the neutral terminal (Nb) of the battery pack;
   (b) a connection (362) between a neutral terminal (N_{F}) of the multi-phase filter (240) and the negative terminal (NT_{b}) of the battery pack (210);
   (c) a connection (463) between a neutral terminal (N_{F}) of the multi-phase filter (240) and the positive terminal (PT_{b}) of the battery pack (210);
   (d) a first connection (564) between a first neutral terminal (N_{F1}) of the multi-phase filter (240) and the negative terminal (NT_{b}) of the battery pack (210) and a second connection (565) between a second neutral terminal (N_{F2}) of the multi-phase filter (240) and the positive terminal (PT_{b}) of the battery pack (210).

Example 2. The power converter (200, 300, 400, 500) according to Example 1, wherein any one of the connections (a) to (d) is implemented by a cable or an impedance component.

Example 3. The power converter (200, 300, 400, 500) according to any one of Examples 1-2, wherein the NPC inverter (230) is any one of a multi-level NPC inverter, an I-type NPC inverter, an active I-type NPC inverter, a T-type NPC inverter, an F-type NPC inverter, and a multi-level version of I-type, active I-type, T-type, F-type NPC inverter.

Example 4. The power converter (200, 300, 400, 500) according to any one of Examples 1-3, wherein the power converter is any one of a Voltage Source Converter, VSC, a High Voltage Direct Current, HVDC, converter, a Direct Current to Direct Current, DC/DC, converter, a Direct Current to Alternating Current, DC/AC, converter, an Alternating Current to Direct Current, AC/DC, converter.

Example 5. The power converter (200, 300, 400, 500) according to any one of Examples 1-4, wherein the neutral terminal (N_{b}) of the battery pack (210) is connected to the middle voltage point (N_{c}) of the DC link (220) directly or via a switch (S1).

Example 6. The power converter (200, 300, 400, 500) according to any one of Examples 1-5, wherein the multi-phase filter (240) is any one of an inductor capacitor inductor, LCL, filter, an inductor inductor-capacitor inductor, LLCL, filter, a cascaded LCL filter, or a cascaded LLCL filter.

Example 7. The power converter (200, 300, 400, 500) according to any one of Examples 1-6, wherein the power converter is implemented in a renewable energy system, a motor drive system, a high-voltage direct current, HVDC, transmission system, a battery energy storage system.

Example 8. The power converter (200, 300, 400, 500) according to any one of Examples 1-6, wherein the power converter is implemented in a motor drive system of a vehicle (800).

Example 9. A vehicle (800) comprises a power converter (200, 300, 400, 500) according to any one of Examples 1-6.

Example 10. A method for forming a common mode loop in a power converter (200, 300, 400, 500), wherein the power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Outi), a positive terminal (PT_{I}) and a negative terminal (NTi);
a multi-phase inductor-capacitor-inductorfilter (240) having one or two neutral terminals (N_{F}, N1_{F}, N2_{F}), each of the multi-phase filter has an input terminal (In_{F}), an output terminal (Out_{F}) ; wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NTi) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are connected to a power system (250); and wherein
the method comprises forming (700) a common mode loop by any one of the following options:
   (a) providing a connection between (710) the neutral terminal (N_{F}) of the multi-phase filter (240) and the neutral terminal (Nb) of the battery pack (210);
   (b) providing a connection between (720) the neutral terminal (N_{F}) of the multi-phase filter (240) and the negative terminal (NT_{b}) of the battery pack (210);
   (c) providing a connection between (730) the neutral terminal (N_{F}) of the multi-phase filter (240) and the positive terminal (PT_{b}) of the battery pack (210);
   (d) providing a first connection between (740) a first neutral terminal (N_{F1}) of the multi-phase filter (240) and the negative terminal (NT_{b}) of the battery pack (210), providing a second connection between a second neutral terminal (N_{F2}) of the multi-phase filter (240) and the positive terminal (PT_{b}) of the battery pack (210).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Outi), a positive terminal (PT_{I}) and a negative terminal (NTi);
a multi-phase inductor-capacitor-inductor, , filter (240) having one or two neutral terminals (N_{F}, N1_{F}, N2_{F}), each of the multi-phase filter has an input terminal (In_{F}), an output terminal (Out_{F}) ; wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NTi) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are connected to a power system (250); and wherein
a common mode loop is formed in the power converter (200, 300, 400, 500) by any one of the following connections:
(a) a connection (261) between a neutral terminal (N_{F}) of the multi-phase filter (240) and the neutral terminal (Nb) of the battery pack;
(b) a connection (362) between a neutral terminal (N_{F}) of the multi-phase filter (240) and the negative terminal (NT_{b}) of the battery pack (210);
(c) a connection (463) between a neutral terminal (N_{F}) of the multi-phase filter (240) and the positive terminal (PT_{b}) of the battery pack (210);
(d) a first connection (564) between a first neutral terminal (N_{F1}) of the multi-phase filter (240) and the negative terminal (NT_{b}) of the battery pack (210) and a second connection (565) between a second neutral terminal (N_{F2}) of the multi-phase filter (240) and the positive terminal (PT_{b}) of the battery pack (210).

2. The power converter (200, 300, 400, 500) according to claim 1, wherein any one of the connections (a) to (d) is implemented by a cable or an impedance component.

3. The power converter (200, 300, 400, 500) according to any one of claims 1-2, wherein the NPC inverter (230) is any one of a multi-level NPC inverter, an I-type NPC inverter, an active I-type NPC inverter, a T-type NPC inverter, an F-type NPC inverter, and a multi-level version of I-type, active I-type, T-type, F-type NPC inverter.

4. The power converter (200, 300, 400, 500) according to any one of claims 1-3, wherein the power converter is any one of a Voltage Source Converter, VSC, a High Voltage Direct Current, HVDC, converter, a Direct Current to Direct Current, DC/DC, converter, a Direct Current to Alternating Current, DC/AC, converter, an Alternating Current to Direct Current, AC/DC, converter.

5. The power converter (200, 300, 400, 500) according to any one of claims 1-4, wherein the neutral terminal (N_{b}) of the battery pack (210) is connected to the middle voltage point (N_{c}) of the DC link (220) directly or via a switch (S1).

6. The power converter (200, 300, 400, 500) according to any one of claims 1-5, wherein the multi-phase filter (240) is any one of an inductor capacitor inductor, LCL, filter, an inductor inductor-capacitor inductor, LLCL, filter, a cascaded LCL filter, or a cascaded LLCL filter.

7. The power converter (200, 300, 400, 500) according to any one of claims 1-6, wherein the power converter is implemented in a renewable energy system, a motor drive system, a high-voltage direct current, HVDC, transmission system, a battery energy storage system.

8. The power converter (200, 300, 400, 500) according to any one of claims 1-6, wherein the power converter is implemented in a motor drive system of a vehicle (800).

9. A vehicle (800) comprises a power converter (200, 300, 400, 500) according to any one of claims 1-6.

10. A method for forming a common mode loop in a power converter (200, 300, 400, 500), wherein the power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Outi), a positive terminal (PT_{I}) and a negative terminal (NTi);
a multi-phase inductor-capacitor-inductor, , filter (240) having one or two neutral terminals (N_{F}, N1_{F}, N2_{F}), each of the multi-phase filter has an input terminal (In_{F}), an output terminal (Out_{F}) ; wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NTi) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are connected to a power system (250); and wherein
the method comprises forming (700) a common mode loop by any one of the following options:
(a) providing a connection between (710) the neutral terminal (N_{F}) of the multi-phase filter (240) and the neutral terminal (Nb) of the battery pack (210);
(b) providing a connection between (720) the neutral terminal (N_{F}) of the multi-phase filter (240) and the negative terminal (NT_{b}) of the battery pack (210);
(c) providing a connection between (730) the neutral terminal (N_{F}) of the multi-phase filter (240) and the positive terminal (PT_{b}) of the battery pack (210);
(d) providing a first connection between (740) a first neutral terminal (N_{F1}) of the multi-phase filter (240) to the negative terminal (NT_{b}) of the battery pack (210), providing a second connection between a second neutral terminal (N_{F2}) of the multi-phase filter (240) to the positive terminal (PT_{b}) of the battery pack (210).

## Amended claims

### Amended claims in accordance with Rule 137(2) EPC.

1. A power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Out_{I}), a positive terminal (PT_{I}) and a negative terminal (NT_{I});
a multi-phase inductor-capacitor-inductor, filter (240) having one or two neutral terminals (N_{F}, N1_{F}, N2_{F}), each of the multi-phase filter has an input terminal (In_{F}), an output terminal (Out_{F}); wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NT_{I}) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are configured for connection to a power system (250); and wherein
a common mode loop is formed in the power converter (200, 300, 400, 500) by any one of the following connections:
(a) a connection (261) between a neutral terminal (N_{F}) of the multi-phase filter (240) and the neutral terminal (Nb) of the battery pack;
(b) a connection (362) between a neutral terminal (N_{F}) of the multi-phase filter (240) and the negative terminal (NT_{b}) of the battery pack (210);
(c) a connection (463) between a neutral terminal (N_{F}) of the multi-phase filter (240) and the positive terminal (PT_{b}) of the battery pack (210);
(d) a first connection (564) between a first neutral terminal (N_{F1}) of the multi-phase filter (240) and the negative terminal (NT_{b}) of the battery pack (210) and a second connection (565) between a second neutral terminal (N_{F2}) of the multi-phase filter (240) and the positive terminal (PT_{b}) of the battery pack (210).

2. The power converter (200, 300, 400, 500) according to claim 1, wherein any one of the connections (a) to (d) is implemented by a cable or an impedance component.

3. The power converter (200, 300, 400, 500) according to any one of claims 1-2, wherein the NPC inverter (230) is any one of a multi-level NPC inverter, an I-type NPC inverter, an active I-type NPC inverter, a T-type NPC inverter, an F-type NPC inverter, and a multi-level version of 1-type, active I-type, T-type, F-type NPC inverter.

4. The power converter (200, 300, 400, 500) according to any one of claims 1-3, wherein the power converter is any one of a Voltage Source Converter, VSC, a High Voltage Direct Current, HVDC, converter, a Direct Current to Direct Current, DC/DC, converter, a Direct Current to Alternating Current, DC/AC, converter, an Alternating Current to Direct Current, AC/DC, converter.

5. The power converter (200, 300, 400, 500) according to any one of claims 1-4, wherein the neutral terminal (N_{b}) of the battery pack (210) is connected to the middle voltage point (N_{c}) of the DC link (220) directly or via a switch (S1).

6. The power converter (200, 300, 400, 500) according to any one of claims 1-5, wherein the multi-phase filter (240) is any one of an inductor capacitor inductor, LCL, filter, an inductor inductor-capacitor inductor, LLCL, filter, a cascaded LCL filter, or a cascaded LLCL filter.

7. The power converter (200, 300, 400, 500) according to any one of claims 1-6, wherein the power converter is configured for use in one or more of a renewable energy system, a motor drive system, a high-voltage direct current, HVDC, transmission system, a battery energy storage system.

8. The power converter (200, 300, 400, 500) according to any one of claims 1-6, wherein the power converter is configured for use in a motor drive system of a vehicle (800).

9. A vehicle (800) comprises a power converter (200, 300, 400, 500) according to any one of claims 1-6.

10. A method for forming a common mode loop in a power converter (200, 300, 400, 500), wherein the power converter (200, 300, 400, 500) comprises:
a battery pack (210) having a neutral terminal (N_{b}), a positive terminal (PT_{b}) and a negative terminal (NT_{b});
a capacitive direct current, DC, link (220) connected in parallel with the battery pack (210);
a multi-phase converter (230), wherein each of the multi-phase converter (230) comprises a multilevel neutral point clamped, NPC, inverter having a neutral terminal (N_{I}), an output terminal (Out_{I}), a positive terminal (PT_{I}) and a negative terminal (NT_{I});
a multi-phase inductor-capacitor-inductor, filter (240) having one or two neutral terminals (N_{F}, N1_{F}, N2_{F}), each of the multi-phase filter has an input terminal (In_{F}), an output terminal (Out_{F}); wherein,
the neutral terminals (N_{I}) of the NPC inverters in the multi-phase converter (230) are connected to the neutral terminal (N_{b}) of the battery pack (210) or a middle voltage point (N_{c}) of the DC link (220);
the positive and negative terminals (PT_{I}, NT_{I}) of the NPC inverters in the multi-phase converter (230) are connected to the positive and negative terminals (PT_{b}, NT_{b}) of the battery pack (210) respectively;
the output terminals (Out_{I}) of the multi-phase converter (230) are connected to the respective input terminals (In_{F}) of the multi-phase filter (240);
the output terminals (OutF) of the multi-phase filter (240) are configured for connection to a power system (250); and wherein
the method comprises forming (700) a common mode loop by any one of the following options:
(a) providing a connection between (710) the neutral terminal (N_{F}) of the multi-phase filter (240) and the neutral terminal (Nb) of the battery pack (210);
(b) providing a connection between (720) the neutral terminal (N_{F}) of the multi-phase filter (240) and the negative terminal (NT_{b}) of the battery pack (210);
(c) providing a connection between (730) the neutral terminal (N_{F}) of the multi-phase filter (240) and the positive terminal (PT_{b}) of the battery pack (210);
(d) providing a first connection between (740) a first neutral terminal (N_{F1}) of the multi-phase filter (240) to the negative terminal (NT_{b}) of the battery pack (210), providing a second connection between a second neutral terminal (N_{F2}) of the multi-phase filter (240) to the positive terminal (PT_{b}) of the battery pack (210).
